# EUROPÄISCHE PATENTANMELDUNG

(11) **EP 0 777 104 A2**
(43) Veröffentlichungstag der Anmeldung: **04.06.1997**
(21) Anmeldenummer: 96118941.2
(22) Anmeldetag: 27.11.1996
(51) Int. Cl.: G01B 11/00

(54) **Verfahren und Anordnung zur dreidimensionalen Videobildauswertung**

(30) Priorität: 01.12.1995 DE 19544811
(71) Anmelder: GRUNDIG Aktiengesellschaft, 90762 Fürth (DE)
(72) Erfinder: Maul, Konrad, Kurgartenstrasse 37, 90762 Furth (DE); Wunderlich, Bernd, Dr., Kurgartenstrasse 37, 90762 Furth (DE)

(57) **Zusammenfassung**

Die Erfindung betrifft ein Verfahren und eine Anordnung zur dreidimensionalen Videobildauswertung.

Bei bekannten Anordnungen zur Wiedergabe von Videosignalen für die Erzeugung von dreidimensionalen Bildern wird das virtuelle räumliche Bild hinter dem zur Anzeige verwendeten Bildschirm erzeugt. Die Auswertung, insbesondere die Vermessung bestimmter Bildpunkte, des räumlichen Bilds ist somit nicht möglich.

Bei der vorliegenden Erfindung wird die Auswertung des virtuellen räumlichen Bilds dadurch ermöglicht, daß das virtuelle räumliche Bild in der Ebene vor dem zur Anzeige verwendeten Bildschirm erzeugt wird.

## Beschreibung

Die Erfindung betrifft ein Verfahren und eine Anordnung zur dreidimensionalen Videobildauswertung, mit den Merkmalen der Oberbegriffe der Ansprüche 1 und 2.

Die Erfindung betrifft ein Verfahren und eine Anordnung zur Anfertigung und zum Ausmessen dreidimensionaler Videoaufnahmen von starren und bewegten Objekten, die dann sowohl als Einzelbild als auch als Filmsequenz vorliegen, beispielsweise zur Auswertung von Unfallortaufnahmen, zur Bestandsaufnahme für Lückenbebauungen und für die Erweiterung von Anlagen und Betrieben einerseits und für die Auswertung solcher Bewegungsabläufe, wie Roboterbewegungen, Strömungsvorgänge und dergleichen. Die Normierung des Meßvorgangs wird durch die Auswertung der räumliche Lage einzelner Objektpunkte zu bekannten Fixpunkten im räumlichen Objekt erreicht.

Aus der Fotografie sind verschiedene Verfahren zur Erzeugung und Auswertung dreidimensionaler Aufnahmen bekannt, bei denen stereoskopisch aufgenommene Bildpaare mittels optischer Meßeinrichtungen ausgemessen werden. Anschließend erfolgt eine Umrechnung dieser Meßwerte auf die Tiefenlage der ausgemessenen Bildpunkte. Diese Umrechnungen sind, auch unter Einsatz der Computertechnik, sehr aufwendig.

Bei einem weiteren aus der Fotografie bekannten Verfahren wird ein virtuelles 3-D-Bild durch Diaprojektion hinter einem für Licht teilweise durchlässigen Projektionsschirm erzeugt. Das hinter dem Projektionsschirm befindliche virtuelle Bild wird mit Hilfe einer Traversiereinrichtung ausgemessen. Ein derartiges Verfahren ist beispielsweise aus dem Wirtschaffspatent DD 0 153 221 bekannt.

Der Nachteil, der sich aus der zeitaufwendigen Bearbeitung des Filmmaterials ergibt, kann durch Einsatz der Videotechnik überwunden werden.

Die gleiche grundsätzliche Unterscheidung, wie bei den Fotoaufnahmen, läßt sich auch hier vornehmen. Entweder werden die beiden stereoskopisch aufgenommenen Videobilder nacheinander in einen Computer eingelesen und es wird aus den Bildunterschieden auf die Tiefe umgerechnet. Hierbei besteht wegen der digitalen Abspeicherung der Bilder im Computer der Nachteil, daß eine Vorauswahl der zu untersuchenden Bilder vorgenommen werden muß und Filmsequenzen je nach Auflösung nur eine sehr begrenzte Länge haben können. Oder die stereoskopisch aufgenommenen Videobilder werden abwechselnd in den Digitalspeicher eines 100-Hz-Fernsehgerätes eingelesen und wechselseitig mit 50 Hz auf dem Bildschirm dargestellt. Für diesen Zweck geeignet ist beispielsweise das Farbfernsehgerät M70-781 IDTV der Anmelderin. Ein Infrarotsender und eine Shutterbrille sorgen dafür, daß das Glas vor dem linken Auge abgedunkelt wird, wenn das Bild von der rechten Kamera auf dem Bildschirm erscheint und umgekehrt.

Mit der gleichen Frequenz kann auch die Polarität eines vor dem Bildschirm angeordneten Porarisationsfilters gewechselt werden. Die Zuordnung zum jeweiligen Auge erfolgt dann mit Hilfe einer Polarisationsbrille.

Wegen der zeitlichen Abfolge bei der Darstellung der beiden Kamerabilder auf dem Bildschirm besteht bei der Wiedergabe schneller Bewegungsabläufe der Nachteil, daß die beiden Bildinhalte nicht mehr zusammenpassen und somit eine räumliche Wiedergabe unmöglich wird. Das trifft auch für auf Videoband aufgezeichnete Aufnahmen zu.

Aus der Patentschritt DE 38 08 969 C1 ist eine Vorrichtung zur Wiedergabe von dreidimensionalen Bildern bekannt, bei der auch schnelle Bewegungsabläufe dreidimensional dargestellt werden können. Zu diesem Zweck weist die Vorrichtung getrennte Verarbeitungswege für die Bilder beider Kameras auf.

Als nachteilig ist bei der bekannten Darstellung von 3-D-Aufnahmen anzusehen, daß sie nur für die Wiedergabe von räumlichen, sich vom Bildschirm aus nach hinten erstreckenden Bildern oder Filmen genutzt wird. Wegen der Entstehung des virtuellen räumlichen Bilds hinter dem Bildschirm sind die bekannten Vorrichtungen zur Darstellung von räumlichen Bildern aus Videobildern nicht zum Ausmessen der entstehenden virtuellen Bilder geeignet.

Aufgabe der vorliegenden Erfindung ist es deshalb, ein Verfahren und eine Anordnung anzugeben, welche die Auswertung, insbesondere die Vermessung, von mittels Videobildern erzeugten räumlichen Bildern ermöglichen.

Erfindungsgemäß wird die Aufgabe dadurch gelöst, daß von dem zu untersuchenden Objekt mittels an sich bekannter 3-D-Videotechnik ein 3-D-Videofilm angefertigt wird, der entweder im online-Betrieb im Fernsehgerät durch Wiedergabe der letzten Bildspeicherinhalte 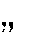 eingefroren" wird, um ein Standbild zu erhalten, das ausgewertet werden kann, oder durch Wiedergabe einer Magnetbandaufzeichnung zu einem gewählten Zeitpunkt. Um das Standbild ausmessen zu können, wird ein virtuelles 3-D-Bild so am Fernsehbildschirm erzeugt, daß es sich vom Bildschirm aus nach vorn in den Raum erstreckt, was dadurch erreicht wird, daß sich die optischen Achsen der beiden Videokameras bei der Aufnahme im hinteren Bereich des Aufnahmeobjektes schneiden. Ein dreidimensional verstellbarer Zeiger wird von einem Beobachter mit den interessierenden und zu vermessenden Bildpunkten in Deckung gebracht, und es werden die Koordinaten dieses Zeigers festgestellt. Zur Bestimmung des Bildmaßstabes ist bei der Aufnahme dafür zu sorgen, daß mehrere Fixpunkte mit bekannten Abständen zueinander im Bild vorhanden sind.

Das erfindungsgemäße Verfahren hat gegenüber den anderen Verfahren den Vorteil, daß dem Betrachter des auszumessenden virtuellen 3-D-Bildes sofort ein Gesamteindruck von dem dreidimensionalen Objekt vermittelt wird und er auch schnelle Bewegungsabläufe fehlerfrei auswerten kann. Da es so möglich ist, nur die interessierenden Bildpunkte auszumessen, fallen keine großen Datenmengen an.

Weitere Vorteile ergeben sich aus der nachfolgenden Beschreibung der Erfindung anhand von Figuren.

Es zeigt
Figur 1 eine Ausführungsform einer erfindungsgemäßen Anordnung,
Figur 2 ein Blockschaltbild einer Videosingnalverarbeitung für eine erfindungsgemäße Anordnung, und
Figur 3 ein Zeitdiagramm der von der erfindungsgemäßen Anordnung wiedergegebenen Halbbilder.

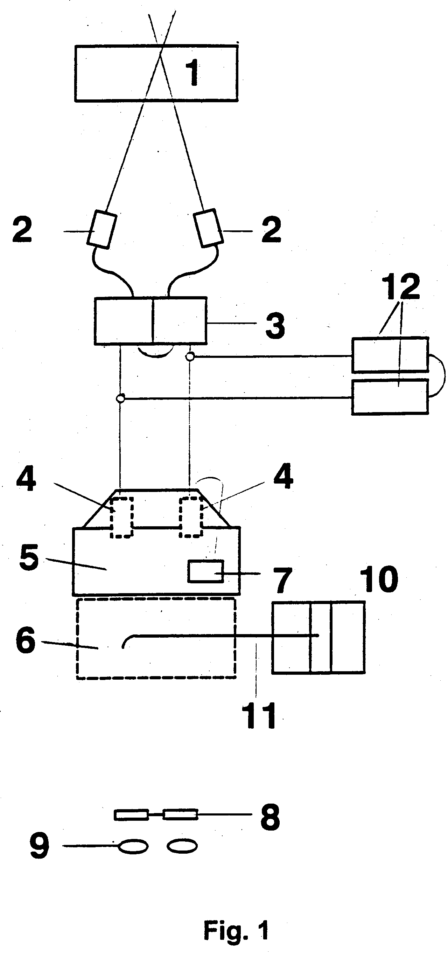

Nach Figur 1 werden auf ein auszumessendes Objekt 1 zwei Videokameras 2 mit ihren u. a. zur Bildsynchronisation dienenden Kamerasteuergeräten 3 so aufgestellt, daß sich die optischen Achsen der beiden Videokameras 2 im hinteren Bereich des Objektes 1 schneiden. Die Videobilder werden über zwei mit getrennten Bildspeichern ausgerüstete Videosignalverarbeitungseinrichtungen 4, die nachfolgend näher erläutert werden, in ein Fernsehgerät 5 eingespeist. Bedingt durch die beschriebene Kameraanordnung wird das virtuelle 3-D-Bild 6 vor dem Fernsehgerät 5 erzeugt. Über eine Shuttersteuerung 7 mit Infrarotsender und eine Shutterbrille 8 erfolgt die Zuordnung des linken oder rechten Auges eines Beobachters 9 zum entsprechenden Kamerabild. Zum Ausmessen des virtuellen 3-D-Bildes 6 dient eine Traversiereinrichtung 10 mit einem als Zeiger verwendeten Lichtleitkabel 11, dessen um 90° gebogene Spitze zum Beobachter 9 zeigt und die Auswertung, wie im eingangs erwähnten Wirtschaffspatent DD 0 153 221 beschrieben, ermöglicht.

Die Aufzeichnung der Videoaufnahmen erfolgt über zwei synchronisierte Videorecorder 12 oder einen Videorecorder mit ausreichender Aufzeichnungskapazität, beispielsweise einen Videorecorder mit einer zweiten Videosignalspur. Bei der Wiedergabe werden wiederum die beiden Videosignalverarbeitungseinrichtungen 4 genutzt. Die Verwendung analoger Videoaufzeichnung ermöglicht es, sich zeitlich sehr lang erstreckende Aufnahmen zu speichern und zu einem späteren Zeitpunkt auszuwerten.

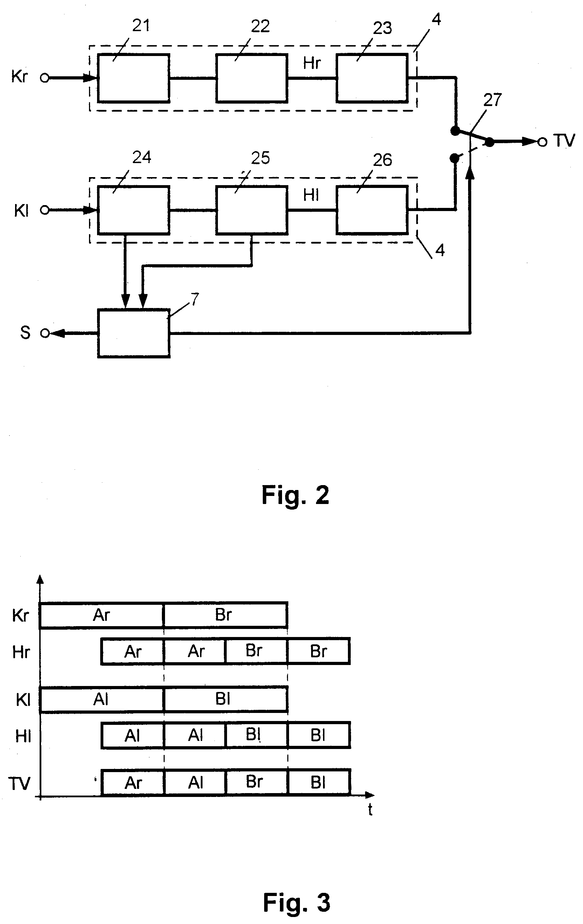

Um die Bilder beider Videokameras synchron in die Bildspeicher des Fernsehgerätes 5 einspeichern zu können, was bei der Aufnahme schneller Bewegungsabläufe notwendig ist, wird, wie oben erwähnt, ein Fernsehgerät 5 mit zwei Videosignalverarbeitungseinrichtungen 4 verwendet. Figur 2 zeigt die Videosignalverarbeitungseinrichtungen 4, die jeweils aus einem Analog/Digital-Wandler 21 und 24 mit digitalem Farbdecoder, einem Halbbildspeicher 22 und 25 sowie einem Digital/Analog-Wandler 23 und 26 bestehen. Die Ausgangssignale der Digital/Analog-Wandler 23 und 26 werden zur Wiedergabe am Bildschirm TV des Fernsehgeräts 5 über einen Schalter 27 umgeschaltet. Der Schalter 27 wird dazu von der Shuttersteuerung 7 so angesteuert, daß jeweils zuerst das erste Halbbild der rechten und linken Kamera, danach jeweils das zweite Halbbild der rechten und linken Kamera dargestellt wird. Entsprechende Steuersignale S werden zur Steuerung der Shutterbrille abgegeben. Da die Bilderzeugung der Kameras 2 durch die Kamerasteuergeräte 3 synchronisiert ist, ist die Auswertung der Steuersignale einer der beiden Videosignalverarbeitungseinrichtungen 4 ausreichend.

Figur 3 stellt die zeitlichen Abläufe dar. Erstes und zweites Halbbild Ar und Br der rechten Kamera Kr werden in den Halbleiterspeicher 22 eingelesen und mit doppelter Frequenz ausgelesen und stehen am Ausgang Hr zur Verfügung. Ebenso wird das erste und zweite Halbbild Al und Bl der linken Kamera Kl in den Halbleiterspeicher 25 eingelesen und mit doppelter Frequenz am Ausgang Hl ausgegeben. Am Bildschirm TV ergibt sich dann die Wiedergabefolge Ar, Al, Br, Bl usw.

## Patentansprüche

1. Verfahren zur dreidimensionalen Videobildauswertung von auch zahlreich anfallenden Videodokumenten, oder von längeren Videosequenzen, die schnelle Bewegungsabläufe beinhalten können, insbesondere Strömungsvorgänge oder Roboterbewegungen,
**dadurch gekennzeichnet,**
daß auf ein zu untersuchendes Objekt (1) zwei Videokameras (2) so ausgerichtet sind, daß sich ihre optischen Achsen im hinteren Bereich des Objektes (1) schneiden, wodurch erreicht wird daß das erzeugte virtuelle dreidimensionale Bild (6) vor dem Bildschirm oder Fernsehgerät (5) entsteht und vorzugsweise mittels einer dreidimensional verstellbaren nahezu punktförmigen Lichtquelle (11) anvisiert und erforderlichenfalls Bilddetails in ihrer räumlichen Ausdehnung abgetastet oder Bildpunkte in ihrer Bewegung verfolgt werden, wobei eine Normierung dadurch erzielt wird, daß zunächst die Lage der Lichtquelle beim Anfahren von Bildpunkten ausgewertet wird, deren natürliche Abstände zueinander bekannt sind.

2. Anordnung zur dreidimensionalen Videobildauswertung, mit
- zwei synchronisierten Videokameras (2),
- zwei Videosignalverarbeitungseinrichtungen (4) zur Verdoppelung der Bildfrequenz, und
- einer Shuttersteuerung (7) und einer Shutterbrille (8) oder einem elektronisch gesteuerten Polarisationsfilter und einer Polarisationsbrille zur Zuordnung der Bilder der linken und rechten Videokamera (2) bei der Wiedergabe mittels eines Fernsehgeräts (5) zu dem linken und rechten Auge eines Beobachters,
**dadurch gekennzeichnet,**
daß die Anordnung eine Traversiereinrichtung (1) mit einem Zeiger (11), der vorzugsweise von einer punktförmigen Lichtquelle gebildet wird, aufweist, daß die zwei Videokameras (2) so auf ein zu untersuchendes Objekt (1) ausgerichtet sind, daß sich ihre optischen Achsen im hinteren Bereich des Objektes (1) schneiden, wodurch erreicht wird, daß das erzeugte virtuelle dreidimensionale Bild (6) vor dem Bildschirm oder Fernsehgerät (5) entsteht, und daß die Traversiereinrichtung (10) so angeordnet ist, daß ihr Zeiger (11) im Bereich des erzeugten dreidimensionalen Bilds (6) verfahren werden kann.

3. Anordnung nach Anspruch 2,
**dadurch gekennzeichnet,**
daß für die Aufzeichnung schneller Bewegungsabläufe zwei synchronisierte oder ein über zwei Spuren verfügender Videorecorder (12) eingesetzt wird.
